# EUROPEAN PATENT SPECIFICATION

(11) **EP 3 528 589 B1**
(45) Date of publication and mention of the grant of the patent: **24.02.2021**
(21) Application number: 17859382.8
(22) Date of filing: 12.10.2017
(51) Int. Cl.: H04W 80/02, H04L 29/08

(54) **WIRELESS COMMUNICATION DEVICE**
DRAHTLOSKOMMUNIKATIONSVORRICHTUNG
DISPOSITIF DE COMMUNICATION SANS FIL

(30) Priority: 14.10.2016 JP 2016203121
(43) Date of publication of application: 21.08.2019
(73) Proprietor: NTT DOCOMO, INC., Chiyoda-ku Tokyo 100-6150 (JP)
(72) Inventor: TAKAHASHI, Hideaki, Tokyo 100-6150 (JP); UCHINO, Tooru, Tokyo 100-6150 (JP); HAPSARI, Wuri Andarmawanti, Tokyo 100-6150 (JP); UMESH, Anil, Tokyo 100-6150 (JP); ABETA, Sadayuki, Tokyo 100-6150 (JP)
(74) Representative: Hoffmann Eitle
(86) International application number: PCT/JP2017/036953
(87) International publication number: WO 2018/070465

(56) References cited:
- WO-A1-2015/108373
- WO-A1-2015/164122
- JP-A- 2004 512 743
- JP-A- 2008 113 095
- JP-A- 2009 044 674
- JP-A- 2015 532 566
- JP-A- 2016 532 327
- "Modelling of MAC for user plane aggregation" In: Ericsson: 2 November 2013 (2013-11-02), 3GPP Draft; R2-134222 Modelling of MAC for user plane aggregation, XP050753395, * *
- "Packet Data Convergence Sublayer for NR" In: Nokia; Alcatel-Lucent Shanghai Bell: 30 September 2016 (2016-09-30), 3GPP Draft; R2-166157 PDCP Sublayer for NR, XP051161604,
- "Parallel PDCP and RLC Processing" In: Fujitsu: 5 November 2016 (2016-11-05), 3GPP Draft; R2-168236 Parallel PDCP and RLC processing,, XP051192977,

## Description

### TECHNICAL FIELD

The present invention relates to a radio communication apparatus.

### BACKGROUND ART

In 3rd Generation Partnership Project (3GPP), 5th generation (5G) systems or new radio access technology (NR) systems have been discussed as next-generation radio communication systems of Long Term Evolution (LTE) systems and LTE-Advanced systems. In 5G systems and NR systems, required conditions for realizing peak rates of downlink 20 Gbps and uplink 10 Gbps are specified (3GPP TR38.913 V13.0.0).

In spite of acceleration of a communication speed of the physical (PHY) layer, there is a possibility of a peak rate not being achieved since processes in packet data convergence protocol (PDCP) and/or radio link control (RLC) layers may not be able to follow the speed and higher layers become bottleneck. Therefore, in order to follow the acceleration in a communication speed of the PHY layer, parallelization of processes in the PDCP and/or RLC layers has been discussed.

WO 2015108373 A1 relates to a method for operating a user plane protocol stack by a user equipment in a connectionless communication system is provided. The method includes dividing a destination ID into a first part and a second part, transmitting a scheduling assignment including a first part of the destination ID, and transmitting a medium access control (MAC) protocol data unit (PDU) including a UE identifier and a second part of the destination ID in a MAC header of the MAC PDU.

### CITATION LIST

### NON-PATENT DOCUMENT

Non-Patent Document 1: 3GPP
Non-Patent Document 2: 3GPP
Non-Patent Document 3: 3GPP
TR38.913 V13.0.0 (2015-12)
TR36.842 V12.0.0 (2013-12)
TR36.214 V14.0.0 (2016-09)

### SUMMARY OF THE INVENTION

### PROBLEM TO BE SOLVED BY THE INVENTION

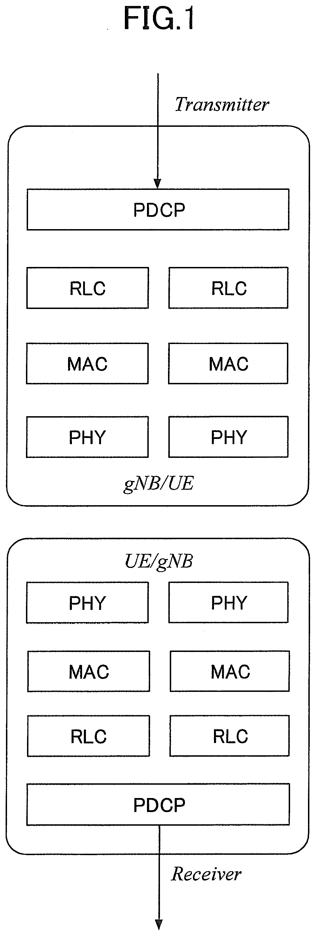

A parallelization process in the RLC layer is considered to be realizable in the RLC layer by applying a split bearer of dual connectivity specified in LTE to the same base station and setting a plurality of RLC entities in the RLC layer, as illustrated in Fig. 1. On the other hand, as illustrated in the drawing, when the split bearer of the dual connectivity is applied without change, a plurality of medium access control (MAC) entities are set to correspond to the plurality of set RLC entities in the MAC layer. Further, a process in the PHY layer is also independently for each MAC entity in the PHY layer.

For example, in uplink transmission, even when user equipments (UE) are connected to the same base station (gNB), a plurality of MAC processes such as buffer status report (BSR) and power head room reporting are performed to correspond to the plurality of MAC entities, and thus redundant processes are performed. Further, the base station individually transmits a physical downlink control channel (PDCCH) in the PHY layer to correspond to the plurality of MAC entities, thereby increasing overhead. Since the MAC entity and the RLC entity are associated as one pair of entities, each MAC entity may not multiplex an RLC packet data unit (PDU) from the RLC entity related with the RLC PDU from an RLC entity different from the related RLC entity.

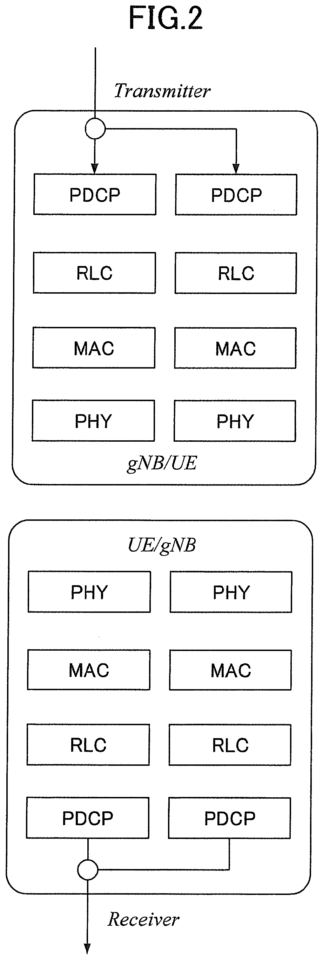

As illustrated in Fig. 2, a structure in which U-plane data in a higher anchoring layer of the PDCP layer is distributed has been examined in Rel-12 (3GPP TR36.842 V12.0.0). The structure can also be considered to be set in the same base station. However, even in this case, the above-described problem may occur.

In view of the above-described problem, an object of the invention is to provide a technology for realizing an efficient parallelization process in the PDCP and/or the RLC layer.

### MEANS FOR SOLVING PROBLEM

The object of the invention is achieved by the subject-matter of the independent claims. Advantageous embodiments are defined in the dependent claims. Further examples are provided for facilitating the understanding of the invention.

An aspect of
relates to a radio communication apparatus
includes: a PDCP processing unit configured to perform a process in a PDCP layer; an RLC processing unit configured to perform a process in an RLC layer; and a MAC processing unit configured to perform a process in a MAC layer. The RLC processing unit includes a plurality of RLC entities and the MAC processing unit includes a single MAC entity.

### EFFECT OF THE INVENTION

According to the invention, it is possible to realize an efficient parallelization process in PDCP and/or RLC layers.

### BRIEF DESCRIPTION OF DRAWINGS

Fig. 1 is a schematic diagram illustrating a PDCP/RLC parallelization process which is an example in which a split bearer in dual connectivity is used;
Fig. 2 is a schematic diagram illustrating a PDCP/RLC parallelization process which is an example in which a split bearer in dual connectivity is used;
Fig. 3 is a schematic diagram illustrating a radio communication system according to an embodiment of the invention;
Fig. 4 is a block diagram illustrating a functional configuration of a radio communication apparatus according to an embodiment of the invention;
Fig. 5 is a schematic diagram illustrating a PDCP/RLC parallelization process according to an embodiment of the invention;
Fig. 6 is a schematic diagram illustrating a PDCP/RLC parallelization process according to an embodiment of the invention;
Fig. 7 is a schematic diagram illustrating a distribution timing to RLC entities in a PDCP layer according to an embodiment of the invention;
Fig. 8 is a schematic diagram illustrating a PDCP/RLC parallelization process according to an embodiment of the invention; and

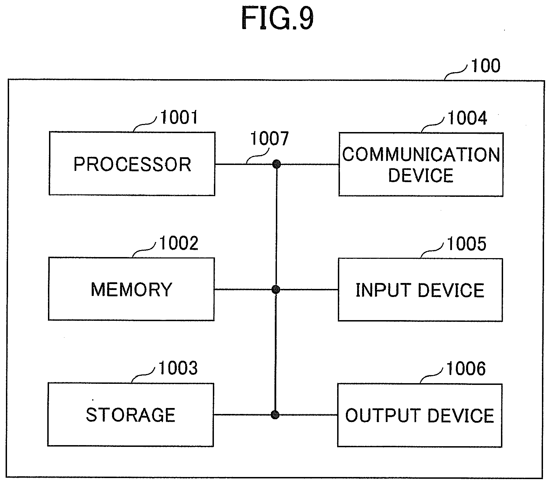

Fig. 9 is a block diagram illustrating a hardware configuration of a radio communication apparatus according to an embodiment of the invention.

### MODE(S) FOR CARRYING OUT THE INVENTION

Hereinafter, embodiments of the invention will be described with reference to the drawings.

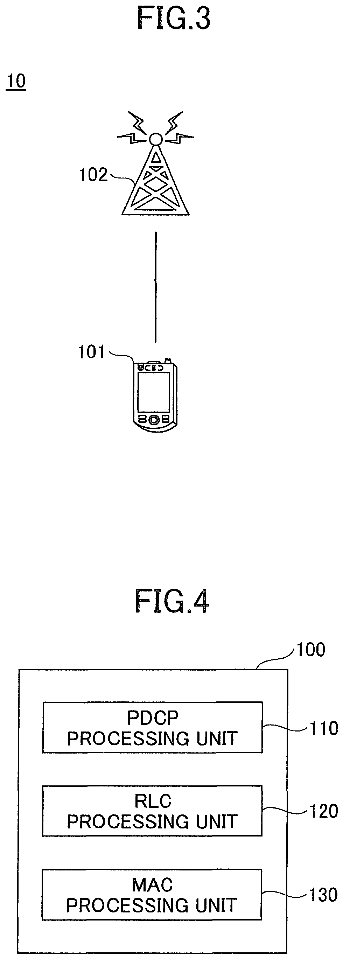

In the following embodiments, a radio communication apparatus that realizes a PDCP and/or RLC parallelization process is disclosed. Roughly speaking, in embodiments to be described, a plurality of RLC entities are set in a bearer transmitted in the same base station to realize a parallelization process in an RLC layer and one MAC entity is set in the plurality of RLC entities to avoid redundant MAC processes. 3. Fig. 3 is a schematic diagram illustrating the radio communication system.

As illustrated in Fig. 3, a radio communication system 10 includes a user equipment (UE) 101 and a base station (gNB) 102 (hereinafter either is referred to as a radio communication apparatus 100). In the following embodiments, the radio communication system 10 is a radio communication system (for example, a 5G system or an NR system) that conforms to standards after Rel-14 of 3GPP, but the invention is not limited thereto. The radio communication system may be any other radio communication system that realizes radio communication based on a layer structure that includes a PDCP layer, an RLC layer, and a MAC layer.

The user equipment 101 is any appropriate information processing apparatus that has a radio communication function, such as a smartphone, a cellular phone, a tablet, a wearable terminal, a machine-to-machine (M2M) communication module, is wirelessly connected to the base station 102, and uses various communication services provided by the radio communication system 10.

The base station 102 provides one or more cells and performs radio communication with the user equipment 101 via the cells. The embodiment illustrated in the drawing, only base station 102 is illustrated. However, many base stations 102 are generally disposed to cover a service zone of the radio communication system 10.

The user equipment 101 and the base station 102 have a PDCP layer, an RLC layer, a MAC layer, and a PHY layer and perform a process in each of these layers to transmit and receive radio signals between the user equipment 101 and the base station 102. As will be described, processes in the PDCP layer, the RLC layer, and the MAC layer are performed by a PDCP entity, an RLC entity, and a MAC entity, respectively.

Next, as illustrated in Figs. 4 to 8, a radio communication apparatus according to an embodiment of the invention will be described. In the embodiment, the user equipment 101 and the base station 102 are collectively referred to as the radio communication apparatus 100 and has a symmetric layer structure in a PDCP layer, an RLC layer, and a MAC layer. In downlink communication, the base station 102 functions as the radio communication apparatus 100 of a transmission side and the user equipment 101 functions as the radio communication apparatus 100 of a reception side. On the other hand, in uplink communication, the user equipment 101 functions as the radio communication apparatus 100 of a transmission side and the base station 102 functions as the radio communication apparatus 100 of a reception side.

Fig. 4 is a block diagram illustrating a functional configuration of a radio communication apparatus according to an embodiment of the invention. As illustrated in Fig. 4, the radio communication apparatus 100 includes a PDCP processing unit 110, an RLC processing unit 120, and a MAC processing unit 130.

The PDCP processing unit 110 performs a process in the PDCP layer. As will be described below, the PDCP processing unit 110 includes one or more PDCP entities. Each PDCP entity performs PDCP processes such as a reordering process, a ciphering process, a security process, and the like on data received from the RLC processing unit 120 and a higher layer.

The RLC processing unit 120 performs a process in the RLC layer. In the embodiment, the RLC processing unit 120 includes a plurality of RLC entities. Each RLC entity performs RLC processes such as a retransmission process (automatic repeat request (ARQ) or the like), a reordering process, and the like on data received from the MAC processing unit 130 and the PDCP processing unit 110.

The MAC processing unit 130 performs a process in the MAC layer. In the embodiment, the MAC processing unit 130 includes a single MAC entity. The MAC entity performs MAC processes such as a retransmission and error correction process (hybrid ARQ (HARQ) or the like), and a logical channel multiplexing process on data received from the PHY layer and the plurality of RLC entities.

In this way, in the embodiment, an RLC parallelization process is realized by setting the plurality of RLC entities. On the other hand, the MAC process is realized by the single MAC entity. Thus, it is possible to accelerate the RLC processes while avoiding execution of redundant MAC processes.

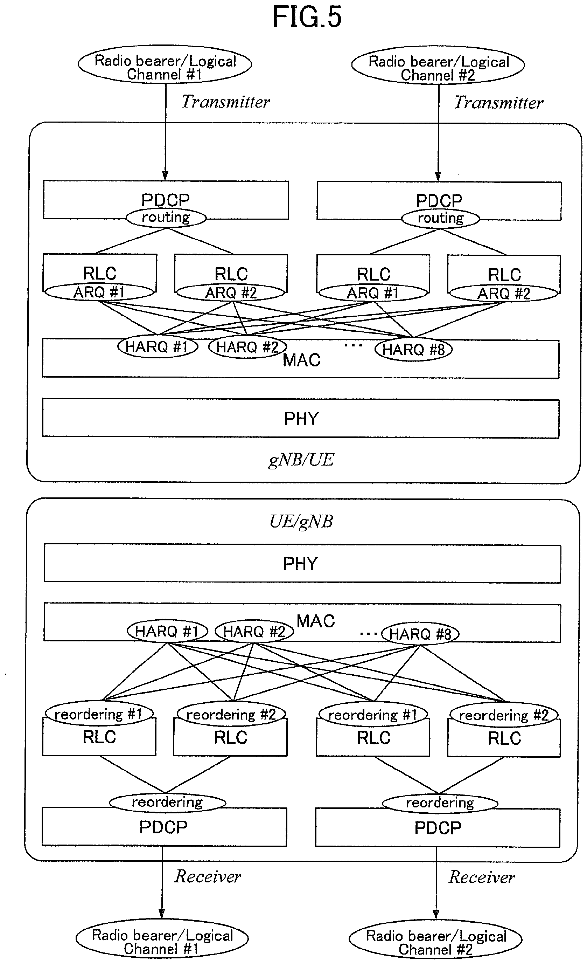

Fig. 5 is a schematic diagram illustrating a PDCP/RLC parallelization process according to an embodiment of the invention. In the embodiment illustrated in Fig. 5, the PDCP processing unit 110 includes one PDCP entity for each logical channel (or radio bearer) and the RLC processing unit 120 includes the plurality of RLC entities for each PDCP entity.

Specifically, as illustrated in Fig. 5, in the radio communication apparatus 100 of the transmission side (the base station 102 in downlink communication and the user equipment 101 in uplink communication), the PDCP entity is set in each of the logical channels or radio bearers #1 and #2. Each PCP entity generates the PDCP PDU by performing the PDCP process on the PDCP service data unit (SDU) received from a higher layer and routes the generated PDCP PDU to an appropriate RLC entity. Each RLC entity generates the RLC PDU by performing the RLC process such as the ARQ on the PDCP PDU or the RLC SDU received from the PDCP entity and transmits the generated RLC PDU to an HARQ process corresponding to the single MAC entity. The MAC entity generates the MAC PDU by performing the MAC process such as the HARQ on the RLC PDU or the MAC SDU received from the RLC entity and transmits the generated MAC PDU to the PHY layer. The PHY layer transmits a radio signal to the radio communication apparatus 100 of the reception side by mapping the received MAC PDU or transport block to a scheduled radio resource.

In the radio communication apparatus 100 of the reception side (the user equipment 101 in downlink communication and the base station 102 in uplink communication), the PHY layer generates a transport block from the received radio signal and transmits the generated transport bock to the MAC entity. The MAC entity generates the MAC SDU by performing the MAC process such as the HARQ on the transport block or the MAC PDU received from the PHY layer and transmits the generated MAC SDU to the corresponding RLC entity. Each RLC entity generates the RLC SDU by performing the RLC process such as the reordering process on the MAC SDU or the RLC PDU received from the MAC entity and transmits the generated RLC SDU to the corresponding PDCP entity. The PDCP entity generates the PDCP SDU by performing the PDCP process such as the reordering process on the RLC SDU or the PDCP PDU received from the RLC entity and transmits the generated PDCP SDU to a corresponding higher layer.

In this way, since data of different logical channels #1 and #2 can be multiplexed in the MAC entity of the transmission side, it is necessary for the MAC entity of the reception side to determine the RLC entity to which the MAC SDU or the RLC PDU transmitted to the RLC processing unit 120 is to be supplied. Therefore, according to an embodiment, the MAC processing unit 130 of the transmission side may include an identifier of the RLC entity which is a destination of the reception side in the RLC PDU. For example, each RLC entity may be numbered and the MAC entity of the transmission side may indicate an identifier of the RLC entity of the reception side which is a destination of the RLC PDU in the headers of all the RLC PDUs including not only data packets but also control data messages. Since the radio communication apparatus 100 of the transmission side and the radio communication apparatus of the reception side have the symmetric layer structure, the MAC entity of the reception side can distribute the RLC PDU to an appropriate RLC entity based on the identifier of the RLC entity indicated in the received RLC PDU.

The MAC processing unit 130 of the transmission side may equally divide a total number of radio resources allocated through logical channel propriety control for each logical channel (or a radio bearer) in accordance with the number of RLC entities and notify the reception side of the equally divided radio resources. For example, the notification may be transmitted as a total size of the RLC PDU(s) to be transmitted in the transmission opportunity to the reception side.

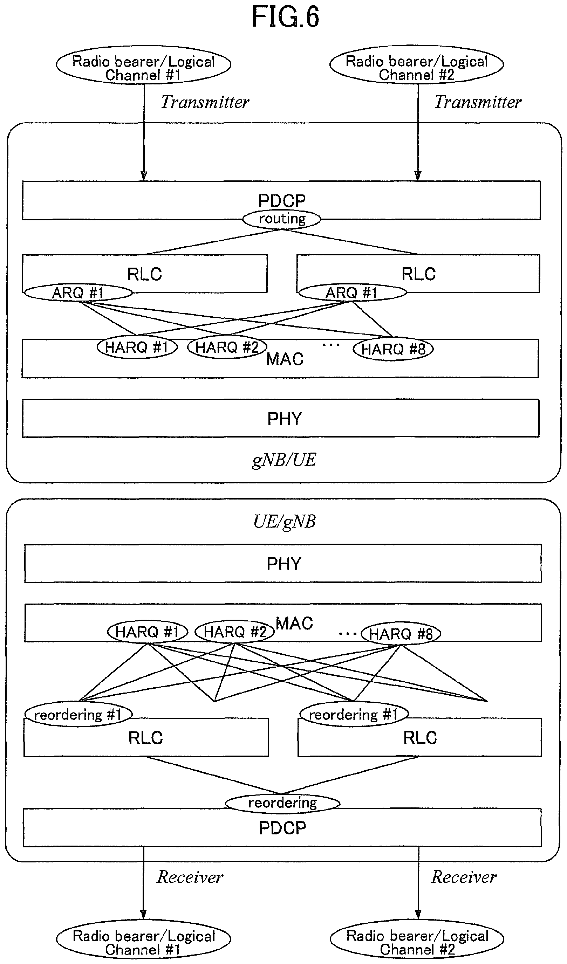

Fig. 6 is a schematic diagram illustrating a PDCP/RLC parallelization process according to an embodiment of the invention. In the embodiment illustrated in Fig. 6, the PDCP processing unit 110 includes the single PDCP entity corresponding to one or more logical channels and the RLC processing unit 120 includes the plurality of RLC entities corresponding to each logical channel.

Specifically, as illustrated in Fig. 6, in the radio communication apparatus 100 of the transmission side (the bases station 102 in downlink communication and the user equipment 101 in uplink communication), the single PDCP entity is set in different logical channels or radio bearers #1 and #2 and the PDCP entity generates the PDCP PDU by performing the PDCP process on the PDCP SDU of the different logical channels or the radio bearers received from the higher layer and routes the generated PDCP PDU to an appropriate RLC entity. Each RLC entity generates the RLC PDU by performing the RLC process such as the ARQ on the PDCP PDU or the RLC SDU received from the PDCP entity and transmits the generated RLC PDU to the HARQ process corresponding to the single MAC entity. The MAC entity generates the MAC PDU by performing the MAC process such as the HARQ on the RLC PDU or the MAC SDU received from the RLC entity and transmits the generated MAC PDU to the PHY layer. The PHY layer transmits a radio signal to the radio communication apparatus 100 of the reception side by mapping the received MAC PDU or transport block to a scheduled radio resource.

In the radio communication apparatus 100 of the reception side (the user equipment 101 in downlink communication and the base station 102 in uplink communication), the PHY layer generates a transport block from the received radio signal and transmits the generated transport block to the MAC entity. The MAC entity generates the MAC SDU by performing the MAC process such as the HARQ on the transport block or the transport block or the MAC PDU received from the PHY layer and transmits the generated MAC SDU to the corresponding RLC entity. Each RLC entity generates the RLC SDU by performing the RLC process such as a reordering process on the MAC SDU or the RLC PDU received from the MAC entity and transmits the generated RLC SDU to the corresponding PDCP entity. The PDCP entity generates the PDCP SDU by performing the PDCP process such as a reordering process on the RLC SDU or the PDCP PDU received from the RLC entity and transmits the generated PDCP SDU to a corresponding higher layer.

In this way, as described above, since data of different logical channels #1 and #2 can be multiplexed in the MAC entity of the transmission side, it is necessary for the MAC entity of the reception side to determine the RLC entity to which the MAC SDU or the RLC PDU transmitted to the RLC processing unit 120 is to be supplied. In the embodiment, however, one logical channel or radio bearer is associated with one RLC entity. Therefore, the MAC processing unit 130 of the reception side can identify the RLC entity which is a destination of the received MAC SDU based on the identifier of the logical channel. That is, the MAC entity of the reception side can determine the RLC entity to which the received MAC SDU is to be supplied by monitoring an identifier (LCID) of the logical channel.

In MAC control (logical channel propriety control, BSR, a prioritized bit rate (PBR), or the like) performed in consideration of a logical channel, a plurality logical channels may be controlled as one logical channel even when the plurality of logical channels are set. In the embodiment of Figs. 5 and 6, the reordering in the RLC layer may not necessarily be performed.

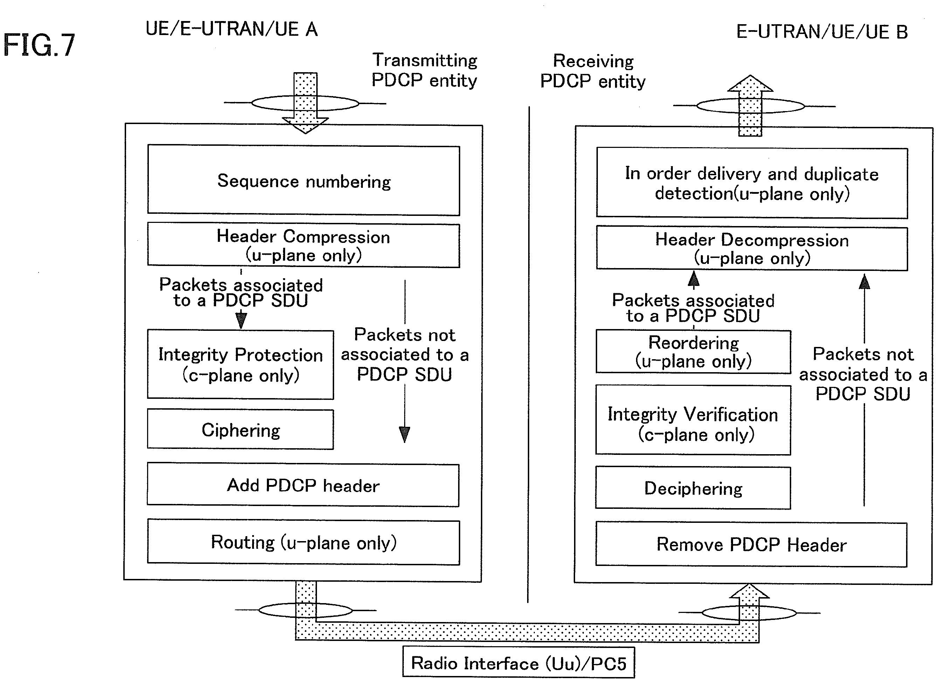

As illustrated in Fig. 7, the PDCP entity of the transmission side may give a sequence number (SN) to data to be supplied to the RLC entity and subsequently determine the RLC entity to which the data is distributed at an any subsequent procedure (header compression, integrity protection, or a ciphering process) or a timing. For example, the PDCP entity may supply the PDCP PDU with an odd SN to the RLC entity corresponding to ARQ #1 and supply the PDCP PDU with an even SN to the RLC entity corresponding to ARQ #2.

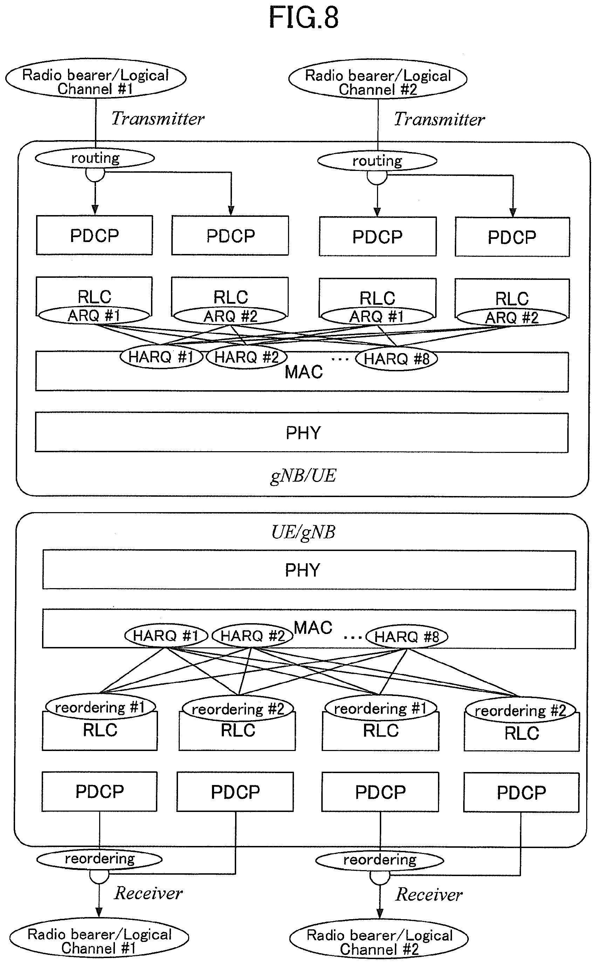

Fig. 8 is a schematic diagram illustrating a PDCP/RLC parallelization process according to an embodiment of the invention. In the embodiment illustrated in Fig. 8, the PDCP processing unit includes the plurality of PDCP entities for each logical channel. In the embodiment, a PDCP and the RLC parallelization process is realized by setting the plurality of PDCP entities and the plurality of RLC entities in each logical channel or radio bearer. On the other hand, the MAC process is realized by the single MAC entity. Thus, it is possible to accelerate the PDCP and RLC processes while avoiding execution of redundant MAC processes.

As illustrated in Fig. 8, in the radio communication apparatus 100 of the transmission side (the base station 102 in downlink communication and the user equipment 101 in uplink communication), the plurality of PDCP entities are set in each of the logical channels, the radio bearers #1 and #2 and transmission target data of each logical channel is distributed to each PDCP entity in a higher anchoring layer of the PDCP layer. Each PDCP entity generates the PDCP PDU by performing the PDCP process on the PDCP service data unit (SDU) received from a higher layer and routes the generated PDCP PDU to an appropriate RLC entity. In the embodiment illustrated in the drawing, the PDCP entity and the RLC entity is associated as one pair of entities, but the invention is not limited thereto. The numbers of PDCP entities may be set to be different from the number of RLC entities. Each RLC entity generates the RLC PDU by performing the RLC process such as the ARQ on the PDCP PDU or the RLC SDU received from the PDCP entity and transmits the generated RLC PDU to a corresponding HARQ process in the single MAC entity. The MAC entity generates the MAC PDU by performing the MAC process such as the HARQ on the RLC PDU or the MAC SDU received from the RLC entity and transmits the generated MAC PDU to the PHY layer. The PHY layer transmits a radio signal to the radio communication apparatus 100 of the reception side by mapping the received MAC PDU or transport block to a scheduled radio resource.

In the radio communication apparatus 100 of the reception side (the user equipment 101 in downlink communication and the base station 102 in uplink communication), the PHY layer generates a transport block from the received radio signal and transmits the generated transport block to the MAC entity. The MAC entity generates the MAC SDU by performing the MAC process such as the HARQ on the transport block or the MAC PDU received from the PHY layer and transmits the generated MAC SDU to the corresponding RLC entity. Each RLC entity generates the RLC SDU by performing the RLC process such as a reordering process on the MAC SDU or the RLC PDU received from the MAC entity and transmits the generated RLC SDU to the corresponding PDCP entity. The PDCP entity generates the PDCP SDU by performing the PDCP process such as a reordering process on the RLC SDU or the PDCP PDU received from the RLC entity and transmits the generated PDCP SDU to a corresponding higher layer.

As described above, when the PDCP entity and the RLC entity are not associated as one pair of entities, it is necessary for the RLC entity of the reception side to determine the PDCP entity to which the RLC SDU or the PDCP PDU transmitted to the PDCP processing unit 110 of the reception side is to be supplied. Therefore, in an embodiment, each PDCP entity of the transmission side may include an identifier of the PDCP entity which is a destination of the reception side in the PDCP PDU. For example, each PDCP entity may be numbered and the PDCP entity may indicate the identifier of the PDCP entity of the reception side which is a destination of the PDCP PDU in the header of the PDCP PDU. In this case, the RLC entity of the transmission side and the RLC entity of the reception side may be associated with each other by including the identifier of the RLC entity which is a destination of the reception side in the RLC PDU, as described above in the embodiment in Fig. 5.

On the other hand, when the PDCP entity and the RLC entity are associated as one pair of entities, data may be distributed for each IP flow in an anchoring layer distributing data of the logical channel. In this case, since procedure guarantee is not necessary between the received data in the different PDCP entities on the reception side, a reordering process is not necessary in a higher layer than the PDCP layer.

In an embodiment, the number of PDCP entities and/or RLC entities may be dynamically changed. That is, the number of set RLC entities may be dynamically changed. Further, when the plurality of PDCP entities are set, the number of PDCP entities may also be dynamically changed.

A transport block size may be equally divided in accordance with the number of RLC entities and each RLC entity may generate the RLC PDU from the equally divided data.

A priority may be given to the plurality of set PDCP/RLC entities. For example, a primary PDCP/RLC entity and a secondary PDCP/RLC entity may be set. In this case, basically, the primary PDCP/RLC entity may be used and the secondary PDCP/RLC entity may be used in response to a predetermined trigger. A predetermined trigger may be, for example, a case in which a data rate equal to or greater than a rate at which one PDCP/RLC entity can be processed is requested, a case in which a data rate exceeds a data rate at which one PDCP/RLC entity can be processed, or a case in which an explicit instruction (for example, an instruction to activate the secondary PDCP/RLC entity) is given from the base station 102. After use of the secondary PDCP/RLC entity is started, the use of the secondary PDCP/RLC entity may be stopped in response to a predetermined trigger. The stopping trigger may be, for example, a case in which an explicit instruction (for example, an instruction to stop the secondary PDCP/RLC entity) is given from the base station 102 or timer-based autonomous stop by the user equipment 101. For example, the timer can be included in the secondary PDCP/RLC entity. When a packet is processed, activation or reactivation may be performed. The explicit instruction from the base station 102 may be given in any layer of radio resource control (RRC), PDCP, RLC, MAC, and PHY (for example, the control PDU). The predetermined trigger may be based on a throughput, a data volume, or the like measured in the base station 102 and specified in 3GPP TS36.214 V14.0.

When any RLC is deleted from the state in which the plurality of RLC entities are set, the RLC entities may be re-established. Here, the RLC entities may be re-established by handover or PDCP data recovery of the related art.

The user equipment 101 may notify the base station 102 of the number of simultaneously settable PDCP entities, the number of RLC entities and/or the number of logical channels or a combination thereof. The base station 102 may be individually notified of the number of simultaneously settable PDCP entities, the number of RLC entities and/or the number of logical channels or the combination thereof as capability information of a UE unit, capability information of a MAC entity unit, or capability information of a band combination unit.

As described above, the block diagrams used to describe the functional configurations according to the foregoing embodiment illustrate blocks of functional units. The functional blocks (constituent elements) are realized by any combination of hardware and/or software. In addition, means for realizing each functional block is not particularly limited. That is, each functional block may be realized by one apparatus in which the functional blocks are combined physically and/or logically or may be realized by two or more apparatuses that are physically and/or logically separated by connecting the plurality of apparatuses directly and/or indirectly (for example, in a wired and/or wireless manner).

For example, the radio communication apparatus 100 according to an embodiment of the invention may function as a computer that performs a process for a radio communication method according to the invention. Fig. 13 is a block diagram illustrating a hardware configuration of the radio communication apparatus 100 according to an embodiment of the invention. The above-described radio communication apparatus 100 may be physically configured as a computer apparatus that includes a processor 1001, a memory 1002, a storage 1003, a communication apparatus 1004, an input apparatus 1005, an output apparatus 1006, and a bus 1007.

In the following description, a term "apparatus" can be replaced with a circuit, a device, a unit, or the like. The hardware configuration of radio communication apparatus 100 may be configured to one apparatus or a plurality of apparatuses illustrated in the drawing or may be configured not to include some of the apparatuses.

The functions of the radio communication apparatus 100 are realized by reading predetermined software (program) on hardware such as the processor 1001 or the memory 1002 so that the processor 1001 can perform an arithmetic operation and controlling communication by the communication apparatus 1004 and reading and/or writing of data in the memory 1002 and the storage 1003.

For example, the processor 1001 controls the entire computer by operating an operating system. The processor 1001 may also be configured as a central processing unit (CPU) that includes an interface with a peripheral apparatus, a control apparatus, an arithmetic apparatus, and a register. For example, the above-described constituent elements may be realized by the processor 1001.

The processor 1001 reads a program (program codes), a software module, or data from the storage 1003 and/or the communication apparatus 1004 to the memory 1002 and performs various processes according to the program, the software module, or the data. As the program, a program causing a computer to perform at least some of the operations described in each of the foregoing embodiment is used. For example, the processes by the constituent elements of the radio communication apparatus 100 may be realized by a control program that is stored in the memory 1002 and is operated by the processor 1001 or may be realized similarly in another functional block. The above-described various processes performed by one processor 1001 have been described, but may be performed simultaneously or sequentially by two or more processors 1001. The processor 1001 may be mounted on one or more chips. The program may be transmitted from a network via an electric communication circuit.

The memory 1002 is a computer-readable recording medium and may be configured by at least one of, for example, a read only memory (ROM), an erasable programmable ROM (EPROM), an electrically erasable programmable ROM (EEPROM), and a random access memory (RAM). The memory 1002 may also be referred to as a register, a cache, a main memory (main storage apparatus), or the like. The memory 1002 can store a program (program codes), a software module, or the like which can be executed to perform a radio communication method according to each embodiment of the invention.

The storage 1003 is a computer-readable recording medium and may be configured by at least one of, for example, an optical disc such as a compact disc ROM (CD-ROM), a hard disk drive, a flexible disc, a magneto-optical disc (for example, a compact disc, a digital versatile disk, a Blu-ray (registered trademark) disc), a smart card, a flash memory (for example, a card, a stick, or a key drive), a floppy (registered trademark) disk, and a magnetic script. The storage 1003 may also be referred to as an auxiliary storage apparatus. The above-described storage medium may be, for example, a database or a server including the memory 1002 and/or the storage 1003 or another appropriate medium.

The communication apparatus 1004 is hardware (a transmission and reception device) that performs communication between computers via a wired and/or wireless network and is also referred to as, for example, a network device, a network controller, a network card, or a communication module. For example, the above-described constituent elements may be realized by the communication apparatus 1004.

The input apparatus 1005 is an input device (for example, a keyboard, a mouse, a microphone, a switch, a button, or a sensor) that receives an input from the outside. The output apparatus 1006 is an output device (for example, a display, a speaker, or an LED lamp) that performs an output to the outside. The input apparatus 1005 and the output apparatus 1006 may be configured to be integrated (for example, a touch panel).

The apparatuses such as the processor 1001 and the memory 1002 are connected to the bus 1007 communicating information. The bus 1007 may be configured as a single bus or may be configured by different buses between the apparatuses.

The radio communication apparatus 100 may be configured to include hardware such as a microprocessor, a digital signal processor (DSP), an application specific integrated circuit (ASIC), a programmable logic device (PLD), or a field programmable gate array (FPGA), or some or all of the functional blocks may be realized by the hardware. For example, the processor 1001 may be mounted as at least one of the hardware.

The notification of information is not limited to the aspects/embodiments described in the present specification and may be performed in accordance with other methods. For example, the notification of information may be performed with physical layer signaling (for example, downlink control information (DCI) or uplink control information (UCI)), higher layer signaling (for example, radio resource control (RRC) signaling, medium access control (MAC) signaling, or report information (master information block (MIB), or a system information block (SIB))), another signal, or a combination thereof. The RRC signaling may be referred to as an RRC message or may be referred to as, for example, an RRC connection setup message or an RRC connection reconfiguration message.

Each aspect/embodiment described in the present specification may be applied to a system in which Long Term Evolution (LTE), LTE-Advanced (LTE-A), SUPER 3G, IMT-Advanced, 4G, 5G, Future Radio Access (FRA), W-CDMA (registered trademark), GSM (registered trademark), CDMA2000, Ultra Mobile Broadband (UMB), IEEE 802.11 (Wi-Fi), IEEE 802.16 (WiMAX), IEEE 802.20, Ultra-WideBand (UWB), Bluetooth (registered trademark), and other appropriate systems are used and/or a next generation system extended based on the system.

The order of the process procedure, the sequence, the flowchart, or the like of each aspect/embodiment described in the present specification may be interchanged unless there is contradiction. For example, in the method described in the present specification, elements of various steps have been proposed in exemplary orders and the invention is not limited to the proposed specific orders.

In the present specification, a specific operation performed by the base station 102 is also performed further by an upper node depending on a case. In a network formed by one network node or a plurality of network nodes including a base station, it should be apparent that various operations performed to communicate with a terminal are considered to be able to be performed by a base station and/or another network node (for example, an MME or an S-GW is considered, but the invention is not limited thereto) other than a base station. The case in which the number of other network nodes other than the base station is 1 has been exemplified above, but a combination of a plurality of other network nodes (for example, an MME and an S-GW) may be used.

Information or the like can be output from a higher layer (or a lower layer) to a lower layer (or a higher layer). Information or the like may be input or output via a plurality of network nodes.

The input or output information or the like may be stored in a specific location (for example, a memory) or may be managed with a management table. Information or the like to be input and output may be overwritten, updated, or edited. Information or the like to be output may be deleted. Information or the like to be input may be transmitted to another apparatus.

Determination may be performed with a value (0 or 1) represented by 1 bit, may be performed by a true or false value (Boolean: true or false), or may be performed through comparison of a numerical value (for example, comparison with a predetermined value).

The aspects/embodiments described in the present specification may be singly used, may be combined, or may be switched and used in accordance with execution. In addition, notification of predetermined information (for example, notification of "being X") is not limited to being performed explicitly and may be performed implicitly (for example, the notification of the predetermined information is not performed).

The invention has been described in detail above, but it should be apparent to those skilled in the art that the invention is not limited to the embodiments described in the present specification. The invention can be embodied as corrected and changed aspects without departing from the scope of the invention decided in the description of the claims. Accordingly, the description of the present specification has been made for exemplary description and has no limited meaning to the invention.

Of course, regardless of the fact that software is referred to as software, firmware, middleware, a microcode, or a hardware description language or is referred to as another name, the software is broadly interpreted as meaning a command, a command set, a code, a code segment, a program code, a program, a sub-program, a software module, an application, a software application, a software package, a routine, a subroutine, an object, an executable file, an execution thread, a procedure, a function, or the like.

Software, a command, or the like may be transmitted or received via a transmission medium. For example, when software is transmitted from a website, a server, or another remote source using a wired technology such as a coaxial cable, an optical cable, a twisted pair, and a digital subscriber line (DSL) and/or a wireless technology such as an infrared ray, radio, and microwaves, the wired technology and/or the wireless technology is included in definition of a transmission medium.

The information, the signal, and the like described in the present specification may be represented using any of various other technologies. For example, the data, the order, the command, the information, the signal, the bit, the symbol, the chip, and the like mentioned throughout the foregoing description may be represented by a voltage, a current, an electromagnetic wave, a magnetic field, or a magnetic particle, an optical field or a photon, or any combination thereof.

The terms described in the present specification and/or terms necessary to understand the present specification may be replaced with terms that have same or similar meanings. For example, a channel and/or a symbol may be a signal. A signal may be a message. A component carrier (CC) may be referred to as a carrier frequency, a cell, or the like.

The terms "system" and "network" used in the present specification are compatibly used.

The information, the parameter, or the like described in the present specification may be represented by an absolute value, may be represented by a relative value from a predetermined value, or may be represented by another piece of corresponding information. For example, a radio resource may be instructed with an index.

The names used for the above-described parameters are not limited in any respect. Further, a numerical expression or the like in which the parameters are used can be different from a numerical expression disclosed explicitly in the present specification. Since various channels (for example, PUCCH and PDCCH) and information elements (for example, TPC) can all be identified with appropriate names, various names allocated to the various channels and information elements are not limited in any respect.

A base station can accommodate one cell (also referred to as a sector) or a plurality (for example, three) of cells. When a base station accommodates a plurality of cells, the entire coverage area of the base station can be divided in to a plurality of smaller areas and each of the smaller areas can also provide a communication service using a base station subsystem (for example, an indoor small-sized base station remote radio head (RRH)). The term "cell" or "sector" refers to a part or all of a coverage area of a base station and/or a base station subsystem that performs a communication service in the coverage. Further, the terms, a "base station," an "eNB," a "cell," and a "sector" can be compatibly used in the present specification. A base station can also be referred to as the term such as a fixed station, NodeB, eNodeB (eNB), an access point, a femtocell, or a small cell.

A mobile station is referred to as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agency, a mobile client, a client, or several other appropriate terms by those skilled in the art.

The term "determining" used in the present specification include a wide variety of operations in some cases. The "determining" can include cases in which performing, for example, calculating, computing, processing, deriving, investigating, looking up (for example, looking up in a table, a database, or another data structure), and ascertaining is considered to perform "determining." In addition, the "determining" can include cases in which performing, for example, receiving (for example, receiving information), transmitting (for example, transmitting information), inputting, outputting, and accessing (for example, accessing data in a memory) is considered to perform "determining ". In addition, the "determining" can include cases in which performing, for example, resolving, selecting, choosing, establishing, and comparing is considered to be perform "determining." That is, the "determining" can include a case in which any operation is considered to perform "determining."

The term "connected" or "coupled" or all modifications of the term means all direct or indirect connection or coupling between two or more elements and can include presence of one or more intermediate elements between two mutually "connected" or "coupled" elements. The connection or the coupling between elements may be physical connection, logical connection, or any combination thereof. When the connection or the coupling is used in the present specification, two elements can be considered to be mutually "connected" or "coupled" by using one or more electric wires, cables, and/or printed electric connection and using electromagnetic energy such as electromagnetic energy with a wavelength of a radio frequency region, a microwave region, and a light (both visible light and invisible light) region as several non-limited and non-inclusive examples.

A reference signal can also be abbreviated to RS (reference signal) and may also be referred to as a pilot in accordance with a standard to be applied.

The description "based on" used in the present specification does not imply "based on only" as long as otherwise mentioned. In other words, the description of "based on" implies both of "based on only" and "based on at least."

When reference to elements in which names "first," "second," and the like used in the present specification are used is made, the amount or order of the elements is not limited generally either. The names can be used in the present specification as methods used to conveniently distinguish two or more elements from each other. Accordingly, reference to first and second elements does not imply that only two elements are employed or a first element is prior to a second element in a certain form.

"Means" in the configuration of each of the foregoing apparatuses may be replaced with a "unit," a "circuit," or a "device."

The terms "include" and "including" are intended to be general as in the term "comprising" as long as "include" and "including," and modifications thereof are used in the present specification or the claims. Further, the term "or" used in the present specification or the claims is intended not to be exclusive OR.

A radio frame may be configured to include one frame or a plurality of frames in a time domain. One frame or each of a plurality of frames in the time domain may also be referred to as a subframe in the time domain. A subframe may also be further configured to include one slot or a plurality of slots in the time domain. A slot may also be further configured to include one symbol or a plurality of symbols (OFDM symbols, SC-FDMA symbols, or the like) in the time domain. The radio frame, the subframe, the slot, and the symbol all represent time units when a signal is transmitted. The radio frame, the subframe, the slot, and the symbol may be respectively other calling methods. For example, in an LTE system, a base station performs scheduling to allocate radio resources (frequency bandwidths, transmission power, or the like which can be used by mobile stations) to mobile stations. A minimum time unit of the scheduling may also be referred to as a transmission time interval (TTI). For example, one subframe may also be referred to as a TTI, a plurality of consecutive subframes may also be referred to as a TTI, or one slot may also be referred to as a TTI. A resource block (RB) is a resource allocation unit of a time domain and a frequency domain and may also include one subcarrier or a plurality of consecutive subcarriers in the frequency domain. The resource block may include one symbol or a plurality of symbols in the time domain of the resource block or may also be the length of one slot, one subframe, or one TTI. One TTI or one subframe may each be configured to include one resource block or a plurality of resource blocks. The structure of the above-described radio frame is merely an example. The number of subframes included in the radio frame, the number of slots included in the subframe, the number of symbols and resource blocks included in the slot, and the number of subcarriers included in the resource block can be modified variously.

### EXPLANATIONS OF LETTERS OR NUMERALS

- 10: radio communication system
- 100: radio communication apparatus
- 101: user equipment
- 102: base station
- 110: PDCP processing unit
- 120: RLC processing unit
- 130: MAC processing unit

## Claims

1. A radio communication apparatus (100) comprising:
a packet data convergence protocol, PDCP, processing unit (110) configured to perform a process in the PDCP layer;
a medium access control, MAC, processing unit (130), including a single MAC entity, configured to perform the process in the MAC layer; and
a radio link control, RLC, processing unit (120) configured to perform a process in an RLC layer; wherein
the PDCP processing unit (110) includes one PDCP entity for each radio bearer;
the RLC processing unit includes a plurality of RLC entities for each PDCP entity; and
the PDCP entity of a transmission side is configured to give a sequence number, to data to be supplied to the RLC entity and to subsequently determine the RLC entity to which the data is distributed at an any subsequent procedure or timing.

2. The radio communication apparatus (100) according to claim 1,
wherein, when transmitting a MAC packet data unit, PDU, the MAC processing unit (130) of the transmission side includes an identifier of the RLC entity on a reception side which is a destination in the MAC PDU.

3. The radio communication apparatus (100) according to claim 1,
wherein the PDCP processing unit (110) includes a single PDCP entity corresponding to one or more radio bearers, and
wherein the RLC processing unit has the one or more RLC entities corresponding to each radio bearer.

4. The radio communication apparatus (100) according to claim 3,
wherein, when receiving a MAC service data unit, SDU, the MAC processing unit (130) of a reception side identifies the RLC entity of the reception side which is a destination of the received MAC SDU based on an identifier of the radio bearer.

5. The radio communication apparatus (100) according to claim 1,
wherein the PDCP processing unit (110) includes a PDCP entity for each of a plurality of radio bearers.

6. The radio communication apparatus (100) according to any one of claims 1 to 2 or 5,
wherein one or both of the number of PDCP entities of the PDCP processing unit and the number of RLC entities of the RLC processing unit is changed dynamically.

## Patentansprüche

1. Funkkommunikationseinrichtung (100), umfassend:
eine Paketdatenkonvergenzprotokoll-, PDCP-, Verarbeitungseinheit (110), die konfiguriert ist, einen Prozess in der PDCP-Schicht durchzuführen;
eine Medienzugangsteuerung-, MAC-, Verarbeitungseinheit (130), die eine einzelne MAC-Entität beinhaltet, die konfiguriert ist, den Prozess in der MAC-Schicht durchzuführen; und
eine Funkverbindungssteuerung-, RLC-, Verarbeitungseinheit (120), die konfiguriert ist, einen Prozess in einer RLC-Schicht durchzuführen; wobei
die PDCP-Verarbeitungseinheit (110) eine PDCP-Entität für jeden Funkträger beinhaltet;
die RLC-Verarbeitungseinheit eine Vielzahl von RLC-Entitäten für jede PDCP-Entität beinhaltet; und
die PDCP-Entität einer Übertragungsseite konfiguriert ist, eine Sequenznummer an Daten zu vergeben, die an die RLC-Entität zu übermitteln sind, und nachfolgend die RLC-Entität zu ermitteln, zu der die Daten bei einer/einem beliebigen nachfolgenden Prozedur oder Zeitablauf zu verteilen sind.

2. Funkkommunikationseinrichtung (100) nach Anspruch 1,
wobei, wenn eine MAC-Paketdateneinheit, PDU, übertragen wird, die MAC-Verarbeitungseinheit (130) der Übertragungsseite eine Kennung der RLC-Entität auf einer Empfangsseite beinhaltet, die ein Ziel in der MAC-PDU ist.

3. Funkkommunikationseinrichtung (100) nach Anspruch 1,
wobei die PDCP-Verarbeitungseinheit (110) eine einzelne PDCP-Entität beinhaltet, die einem oder mehreren Funkträgern entspricht, und
wobei die RLC-Verarbeitungseinheit die eine oder mehreren RLC-Entitäten aufweist, die jedem Funkträger entsprechen.

4. Funkkommunikationseinrichtung (100) nach Anspruch 3,
wobei, wenn eine MAC-Dienstdateneinheit, SDU, empfangen wird, die MAC-Verarbeitungseinheit (130) einer Empfangsseite die RLC-Entität der Empfangsseite, die ein Ziel der empfangenen MAC-SDU ist, basierend auf einer Kennung des Funkträgers identifiziert.

5. Funkkommunikationseinrichtung (100) nach Anspruch 1,
wobei die PDCP-Verarbeitungseinheit (110) eine PDCP-Entität für jeden einer Vielzahl von Funkträgern beinhaltet.

6. Funkkommunikationseinrichtung (100) nach einem der Ansprüche 1 bis 2 oder 5,
wobei eine oder beide der Anzahl von PDCP-Entitäten der PDCP-Verarbeitungseinheit und der Anzahl von RLC-Entitäten der RLC-Verarbeitungseinheit dynamisch geändert werden.

## Revendications

1. Appareil de communication radio (100) comprenant :
une unité de traitement de protocole de convergence de données par paquets, PDCP (110) configurée pour exécuter un processus dans la couche PDCP ;
une unité de traitement de contrôle d'accès de support, MAC (130), incluant une entité MAC unique, configurée pour exécuter le processus dans la couche MAC ; et
une unité de traitement de commande de liaison radio, RLC (120) configurée pour exécuter un processus dans une couche RLC ; dans lequel
l'unité de traitement PDCP (110) inclut une entité PDCP pour chaque support radio ;
l'unité de traitement RLC inclut une pluralité d'entités RLC pour chaque entité PDCP; et
l'entité PDCP d'un côté transmission est configurée pour donner un nombre de séquence, à des données à fournir à l'entité RLC et pour déterminer ensuite l'entité RLC à laquelle les données sont distribuées lors d'une quelconque procédure ou d'un quelconque moment ultérieur(e).

2. Appareil de communication radio (100) selon la revendication 1,
dans lequel, lors de la transmission d'une unité de données de paquets, PDU, MAC, l'unité de traitement MAC (130) du côté transmission inclut un identificateur de l'entité RLC sur un côté réception qui est une destination dans la PDU MAC.

3. Appareil de communication radio (100) selon la revendication 1,
dans lequel l'unité de traitement PDCP (110) inclut une entité PDCP unique correspondant à un ou plusieurs supports radio, et
dans lequel l'unité de traitement RLC présente les une ou plusieurs entités RLC correspondant à chaque support radio.

4. Appareil de communication radio (100) selon la revendication 3,
dans lequel, lors de la réception d'une unité de données de service, SDU, MAC, l'unité de traitement MAC (130) d'un côté réception identifie l'entité RLC du côté réception qui est une destination de la SDU MAC reçue sur la base d'un identifiant du support radio.

5. Appareil de communication radio (100) selon la revendication 1,
dans lequel l'unité de traitement PDCP (110) inclut une entité PDCP pour chacun d'une pluralité de supports radio.

6. Appareil de communication radio (100) selon l'une quelconque des revendications 1 à 2 ou 5,
dans lequel un ou les deux parmi le nombre d'entités PDCP de l'unité de traitement PDCP et le nombre d'entités RLC de l'unité de traitement RLC est modifié de manière dynamique.
